# EUROPEAN PATENT SPECIFICATION

(11) **EP 2 428 525 B1**
(45) Date of publication and mention of the grant of the patent: **30.03.2016**
(21) Application number: 10772286.0
(22) Date of filing: 07.05.2010
(51) Int. Cl.: C08F 10/00, C08F 4/6592, C08F 20/00, D01F 6/04

(54) **OLEFIN POLYMER AND FIBER INCLUDING SAME**
OLEFINPOLYMER UND FASER DAMIT
POLYMÈRE D'OLÉFINE ET FIBRE LE COMPRENANT

(30) Priority: 07.05.2009 KR 20090039586
(43) Date of publication of application: 14.03.2012
(73) Proprietor: LG Chem, Ltd., Youngdungpo-gu Seoul 150-721 (KR)
(72) Inventor: CHO, Joon-Hee, Daejeon 302-589 (KR); CHO, Young-Jin, Seoul 156-792 (KR); LEE, Soo-Jeong, Daejeon 305-721 (KR); LEE, Ki-Soo, Daejeon 305-509 (KR); KWON, Heon-Yong, Daejeon 305-340 (KR); LEE, Yong-Ho, Incheon 400-101 (KR); KIM, Dong-Hyun, Daejeon 305-340 (KR); HONG, Dae-Sik, Gunpo-si Gyeonggi-do 435-055 (KR)
(74) Representative: Goddar, Heinz J.
(86) International application number: PCT/KR2010/002924
(87) International publication number: WO 2010/128826

(56) References cited:
- WO-A1-2006/088306
- JP-A- H03 260 110
- KR-A- 20080 097 949
- KR-B1- 100 579 843
- KR-B1- 100 646 249
- KR-B1- 100 886 681
- US-A- 4 504 432
- US-A- 5 272 236

## Description

### BACKGROUND OF THE INTENTION

### (a) Field of the invention

The present invention relates to an olefin-based polymer which can be made into a fiber having the characteristics of high drawing and high tenacity, and a fiber comprising the same. This application claims priority to and the benefit of Korean Patent Application 10-2009-0039586 filed in the Korean Intellectual Property Office on May 7.

### (b) Description of the Related Art

Generally, high density polyethylene (HDPE) means a polyethylene which can be prepared even at low temperature and pressure and has the density of 0.94 g/cm³ or more, contrary to existing low density polyethylene.

The high density polyethylene differs from paraffin waxes in the aspect of having high molecular weight, the molecular weight of paraffin waxes is from hundreds to thousands but the molecular weight of high density polyethylene can be distributed from thousands to millions. In the high density polyethylene, not only physical properties such as impact strength, tearing strength, environmental stress crack resistance, elongation, and the like, but also processing characteristics like melt viscosity changes differently each other according to the molecular weight, the molecular weight distribution, the density, and the like. Therefore, it is required to control said characteristics adequately according to the range of application and practical use of the high density polyethylene.

Until now, the main use of high density polyethylene has been a field of packaging container, and the field can be classified into two general types of a hard packaging container like a bottle and a tank, and a flexible packaging container like a pocket and a pouch. Such high density polyethylene can be prepared by using a general universal catalyst like Zeigler-Natta catalyst, chromium (Cr), and the like.

Meanwhile, high density polyethylene for preparing a high strength fiber such as a rope and a fishing net requires the characteristics of high drawing and high tenacity.

It is known that narrower molecular weight distribution of high density polyethylene shows better mechanical property in fiber products. Namely, high density polyethylene has the characteristic of high draw ratio when the molecular weight distribution is narrow, and it can have high tenacity by high drawing. However, if the molecular weight distribution of high density polyethylene is too narrow, there is a problem of that the processibility becomes very inferior.

For example, high density polyethylene prepared by using a general Zeigler-Natta catalyst, chromium catalyst and the like has polydisperse index of 7 or more, and is superior in the processibility, but it has a problem of that the tenacity is inferior, and high density polyethylene prepared by using a general metallocene catalyst has polydisperse index of 3 or less and is superior in the tenacity, but it has a problem of that the processibility is inferior.

Therefore, the high density polyethylene which can satisfy the mechanical properties and the processibility at the same time and the catalyst which can prepare the same are needed for the fiber products of high strength fiber, however, such technology have been nonexistent.

From this background, it has been constantly demanded to prepare more excellent resin which balances on various properties, and the studies for this are more needed.

US 4,504,432 discloses a process for producing a monofilament having a high tenacity from a thermoplastic resin. JPH 03260110 discloses a raw fiber made of a high-density polyethylene having a density of ≳ 0.940 g/cm3 and is preheated without drawing and the treated fiber is continuously drawn in a drawing zone.

### SUMMARY OF THE INVENTION

It is an aspect of the present invention to provide an olefin-based polymer which can be prepared by using a supported metallocene catalyst and can provide a fiber showing the characteristic of high drawing and high tenacity, and a fiber comprising the same.

According to this, the present invention provides an olefin-based polymer, of which:
1) the density is 0.94 ∼ 0.96 g/cm³,
2) the melt index (MI; 190°C, 2.16kg) is 0.1 ∼ 1.5 g/10min, and
3) the polydisperse index (PDI; Mw/Mn) is 2 ∼ 7.

The present invention also provides a method of preparing an olefin-based polymer including the step of polymerizing an olefin-based monomer in the presence of a supported metallocene catalyst,

The present invention also provides a fiber comprising the olefin-based polymer. The fiber according to the present invention may have the tenacity of 9 ∼ 12 gf/denier and the drawing ratio thereof may be in the range of 7 ∼ 14 times.

The present invention also provides a method of preparing a fiber using a resin composition comprising the olefin-based polymer, and including a shape-forming step.

The present invention also provides a product including the fiber.

The olefin-based polymer according to the present invention can be prepared by using a supported metallocene catalyst and has narrow molecular distribution, and it can provide a fiber showing the characteristics of high drawing and high tenacity.

### DETAILED DESCRIPTION OF THE EMBODIMENTS

Hereinafter, the present invention is explained in more detail.

The olefin-based polymer according to the present invention is characterized in that 1) the density is 0.94 ∼ 0.96 g/cm³, 2) the melt index (MI; 190°C, 2.16kg) is 0.1 ∼ 1.5 g/10min, and 3) the polydisperse index (PDI; Mw/Mn) is 2 ∼ 7.

In the olefin-based polymer according to the present invention, the density is preferably 0.948 ∼ 0.958 g/cm³, the melt index (MI; 190°C, 2.16kg) is preferably 0.4 - 1 g/10min, and the polydisperse index (PDI; Mw/Mn) is preferably 3∼5, and more preferably 3.5 ∼ 4, however, it is not limited to this.

In the olefin-based polymer according to the present invention, the characteristics of density, melt index, and molecular weight distribution relates to the characteristics of drawing ratio, tenacity, and processibility which are revealed in the preparation of high strength fiber product by using the olefin-based polymer.

More specifically, the narrower the molecular weight distribution of the olefin-based polymer, the better the drawing ratio. Furthermore, the higher the drawing ratio, the better the tenacity, and the higher the density and the larger the molecular weight, the better the tenacity if the drawing ratio is same.

Namely, it can be known that the molecular weight distribution must be narrow for realizing the high drawing ratio. However, if the molecular weight distribution is too narrow, the processibility may become inferior, and thus, as disclosed above, the high drawing ratio and the suitable processibility can be realized as the optimized characteristics when the molecular weight distribution is 3 ∼ 5. Furthermore, the larger the molecular weight, namely, the smaller the melt index, the better the tenacity, however, if the molecular weight is too large, there is a problem of that the processing machine is overloaded and the processibility and the productivity become very inferior. Therefore, as disclosed above, the characteristic of superior processibility can be shown when the melt index is 0.4 ∼ 1 g/10min.

Meanwhile, since the larger the density, the better the tenacity at the same drawing ratio, the olefin-based polymer according to the present invention is preferably a homopolymer without using comonomers. Furthermore, because the homopolymer shows the characteristics that the density decreases as the molecular weight distribution is narrow and the melt index is small, the olefin-based polymer can show the optimized characteristics of high drawing and high tenacity when the density is 0.948 ∼ 0.958 g/cm³, the melt index (MI, 190°C, 2.16kg) is 0.4 ∼ 1 g/10min, and the polydisperse index (PDI; Mw/Mn) is 3 ∼ 5.

Furthermore, it is preferable in the aspects of appearance, processibility and various properties of the product that the melt flow rate ratio (MFRR) of the olefin-based polymer of the present invention is 20 ∼ 40.

The olefin-based polymer according to the present invention may be prepared by using a supported metallocene catalyst. The supported metallocene catalyst is a supported metallocene catalyst that one metallocene catalyst is, or two or more metallocene catalysts are supported on a supporting material, however, it is not limited to this.

The metallocene catalyst may be the metallocene catalysts represented by Chemical Formula 1, Chemical Formula 2, Chemical Formula 3, or Chemical Formula 4. However, it is not limited to these.

[Chemical Formula 1] (CpR1)n(Cp'R2)MQ₃₋ₙ

in Chemical Formula 1,
M is a group 4 transition metal;
Cp and Cp' are same or different each other, and independently selected from the group consisting of cyclopentadienyl, indenyl, 4,5,6,7-tetahydro-1-indenyl, and fluorenyl radicals, and these may be substituted by a C₁-C₂₀ hydrocarbon;
R1 and R2 are same or different each other, and independently hydrogen; a C₁-C₂₀ alkyl, a C₁-C₁₀ alkoxy; a C₆-C₂₀ aryl; a C₆-C₁₀ aryloxy; a C₂-C₂₀ alkenyl; a C₇-C₄₀ alkylaryl; a C₇-C₄₀ arylalkyl; a C₈-C₄₀ arylalkenyl; or a C₂-C₁₀ alkynyl;
Q is a halogen atom; a C₁-C₂₀ alkyl; a C₂-C₁₀ alkenyl; a C₇-C₄₀ alkylaryl; a C₇-C₄₀ arylalkyl; a C₆-C₂₀ aryl; a substituted or unsubstituted C₁-C₂₀ alkylidene; a substituted or unsubstituted amino group; a C₂-C₂₀ alkylalkoxy; or a C₇-C₄₀ arylalkoxy; and
n is 1 or 0, 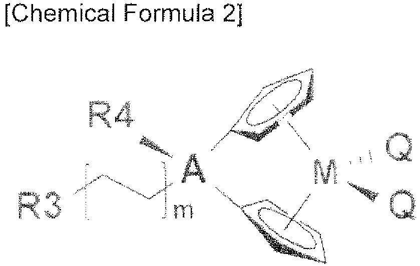
in Chemical Formula 2,
M is a group 4 transition metal;
R3 and R4 are same or different each other, and independently hydrogen, a C₁-C₂₀ alkyl, a C₂-C₂₀ alkenyl, a C₆-C₂₀ aryl, a C₇-C₄₀ alkylaryl, a C₇-C₄₀ arylalkyl, a C₁-C₂₀ alkylsilyl, a C₆-C₂₀ arylsilyl, methoxymethyl, t-butoxymethyl, tetrahydropyranyl, tetrahydrofuranyl, 1-ethoxyethyl, 1-methyl-1-methoxyethyl, or t-butyl;
A is at least one selected from the group consisting of a C₂-C₄ alkylene; a C₁-C₄ alkyl silicone or germanium; and a C₁-C₄ alkyl phosphine or amine;
Q is same or different each other, and independently a halogen atom; a C₁-C₂₀ alkyl; a C₂-C₁₀ alkenyl; a C₇-C₄₀ alkylaryl; a C₇-C₄₀ arylalkyl; a C₂-C₂₀ aryl; a substituted or unsubstituted C₁-C₂₀ alkylidene; a substituted or unsubstituted amino group; a C₂-C₂₀ alkylalkoxy; or a C₇-C₄₀ arylalkoxy; and
m is an integer of 0 to 10, 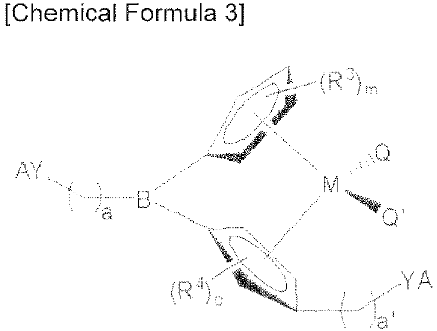 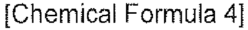 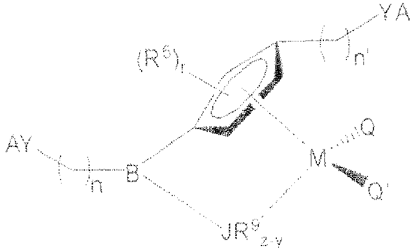
in Chemical Formulae 3 and 4,
M is a group 4 transition metal on the periodic table;
R³, R⁴, and R⁵ are same or different each other, and independently a C₁-C₂₀ alkyl radical, a C₂-C₂₀ alkenyl radical, a C₃-C₃₀ cycloalkyl radical, a C₆-C₃₀ aryl radical, a C₇-C₃₀ alkylaryl radical, a C₇-C₃₀ arylalkyl radical, or a C₈-C₃₀ arylalkenyl radical;
Q and Q' are same or different each other, and independently a halogen radical, a C₁-C₂₀ alkyl radical, a C₂-C₁₀ alkenyl radical, a C₆-C₃₀ aryl radical, a C₇-C₃₀ alkylaryl radical, or a C₇-C₃₀ arylalkyl radical, and Q and Q' may form a C₁-C₂₀ hydrocarbon ring together;
B is a C₁-C₄ alkylene radical, dialkyl silicone, germanium, alkyl phosphine, or amine, which is a bridge for connecting two cyclo pentadienyl-based ligands or cyclopentadienyl-based ligand and JR⁹_{z-y} by covalent bonds;
R⁹ is hydrogen radical, a C₁-C₂₀ alkyl radical, a C₂-C₂₀ alkenyl radical, a C₆-C₃₀ aryl radical, a C₇-C₃₀ alkylaryl radical, or a C₇-C₃₀ arylalkyl radical;
J is a group 15 element or a group 16 element on the periodic table;
z is an oxidation number of element J;
y is a bond number of element J;
a, a', n, and n' are same or different each other, and independently positive integers larger than 0;
m is an integer of 0 - 3;
o is an integer of 0 ∼ 2;
r is an integer of 0 ∼ 2;
Y represents a hetero atom of O, S, N, or P; and

A represents hydrogen, or a C₁-C₁₀ alkyl radical.

The metallocene catalysts represented by Chemical Formula 1 and Chemical Formula 2 may be preferably the metallocene catalysts represented by Chemical Formula 5 and Chemical Formula 6, respectively.

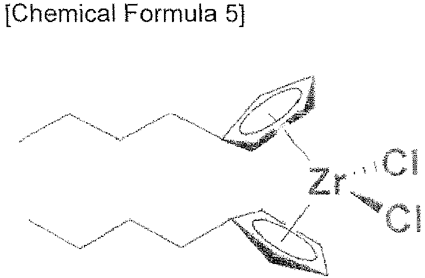

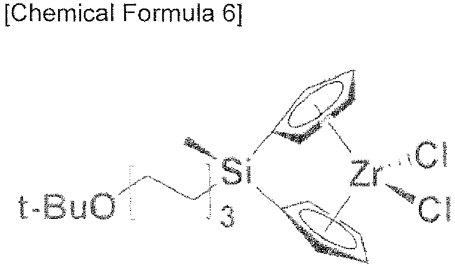

The supported metallocene catalyst is preferably a hybrid supported metallocene catalyst that two or more different metallocene catalysts are supported on the supporting material.

A silica which is dried at high temperature, a silica-alumina, a silica-magnesia, and the like may be used as the supporting material usable for preparing the supported metallocene catalyst, and they may usually include an oxide, a carbonate, a sulfate, a nitrate, such as Na₂O, K₂CO₃, BaSO₄, Mg(NO₃)₂, and the like.

It is preferable that the amount of hydroxyl group (-OH) on the surface of the supporting material is as little as possible, however, it is practically difficult to eliminate every hydroxyl group (-OH). Therefore, the amount of hydroxyl group (-OH) is preferably 0.1 ∼ 10 mmol/g, more preferably 0.1 - 1 mmol/g, and still more preferably 0.1 ∼ 0.5 mmol/g. The amount of hydroxyl group (-OH) on the surface can be controlled by the preparing condition or method, or the drying condition or method of the supporting material (temperature, time, pressure, and so on). Furthermore, in order to reduce the side-reaction caused by some hydroxyl groups remaining after dry, the supporting material in which siloxane groups having large reactivity and participating the support are remained and the hydroxyl groups are chemically eliminated can be used.

The supported metallocene catalyst may further include one or more compounds selected from the group consisting of the cocatalyst compounds represented by Chemical Formulae 7 to 9 in order to activate the metallocene catalyst.

[Chemical Formula 7] -(Al(R8)-0]ₙ-

in Chemical Formula 7,
R8 is same or different each other, and independently a halogen; a C₁-C₂₀ hydrocarbon; or a halogen-substituted C₁-C₂₀ hydrocarbon; and
n is an integer of 2 or more;

[Chemical Formula 8] D(R8)₃

in Chemical Formula 8,
R8 is same as that in Chemical Formula 7; and
D is aluminum or boron; 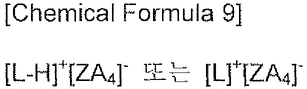
in Chemical Formula 9,
L is a neutral or cationic Lewis acid;
H is hydrogen atom;
Z is a group 13 element; and
A is same or different each other, and independently a C₆-C₂₀ aryl group or a C₁-C₂₀ alkyl group of which at least one hydrogen atoms are substituted by a halogen, a C₁-C₂₀ hydrocarbon, alkoxy, or phenoxy.

Examples of the compound represented by Chemical Formula 7 are methylaluminoxane, ethylaluminoxane, isobutylaluminoxane, butylaluminoxane, and the like, and the preferable compound is methylaluminoxane.

Examples of the compound represented by Chemical Formula 8 include trimethylaluminum, triethylaluminum, triisobutylaluminum, tripropylaluminum, tributylaluminum, dimethylchloroaluminum, triisopropylaluminum, tri-s-butylaluminum, tricyclopentylaluminum, tripentylakuminum, triisopentylaluminum, trihexylaluminum, trioctylaluminum, ethyldimethylaluminum, methyldiethyl aluminum, triphenylaluminum, tri-p-tolylaluminum, dimethylaluminum methoxide, dimethylaluminum ethoxide, trimethylboron, triethylboron, triisobutylboron, tripropylboron, tributylboron, and the like, and the preferable compound is selected from trimethylaluminum, triethylaluminum, and triisobutylaluminum.

Examples of the compound represented by Chemical Formula 8 are triethylammonium tetraphenylboron, tributylammonium tetraphenylboron, trimethylammonium tetraphenylboron, tripropylammonium tetraphenylboron, trimethylammonium tetra(p-tolyl)boron, trimethylammonium tetra(o,p-dimethylphenyl)boron, tributylammonium tetra(p-trifluoromethylphenyl)boron, trimethylammonium tetra(p-trifluoromethylphenyl)boron, tributylammonium tetrapentafluorophenylboron, N,N-diethylanilinium tetraphenylboron, N,N-diethylanilinium tetrapentafluorophenylboron, diethylammonium tetrapentafluorophenylboron, triphenylphosphonium tetraphenylboron, trimethylphosphonium tetraphenylboron, triethylammonium tetraphenylaluminum, tributylammonium tetraphenylaluminum, trimethylammonium tetraphenylaluminum, tripropylammonium tetraphenylaluminum, trimethylammonium tetra(p-tolyl)aluminum, tripropylammonium tetra(p-tolyl)aluminum, triethylammonium tetra(o,p-dimethylphenyl)aluminum, tributylammonium tetra(p-trifluoromethylphenyl)aluminum, trimethylammonium tetra(p-trifluoromethylphenyl)aluminum, tributylammonium tetrapentafluorophenylaluminum, N,N-diethylanilinium tetraphenylaluminum, N,N-diethylanilinium tetrapentafluorophenylaluminum, diethylammonium tetrapentatetraphenylaluminum, triphenylphosphonium tetraphenylaluminum, trimethylphosphonium tetraphenylaluminum, tripropylammonium tetra(p-tolyl)boron, triethylammonium tetra(o,p-dimethylphenyl)boron, tributylammonium tetra(p-trifluoromethylphenyl)boron, triphenylcarbonium tetra(p-trifluoromethylphenyl)boron, triphenylcarbanium tetrapentafluorophenylboron, and the like.

It is preferable for the olefin polymerization that the content of group 4 transition metal on the periodic table in the supported metallocene catalyst is 0.1 - 20 weight%, more preferably 0.1 - 10 weight%, and still more preferably 1 ∼ 3 weight%. When the content of the group 4 transition metal on the periodic table is larger than 20 weight%, the catalysts break away from the supporting material during the olefin polymerization and it may cause a problem like a fouling, and it is not preferable in the commercial aspect because the production cost increases.

Furthermore, the cocatalyst includes a group 13 metal on the periodic table, and the mole ratio of the group 13 metal /the group 4 metal in the supported metallocene catalyst is preferably 1 - 10,000, more preferably 1 ∼ 1,000, and still more preferably 10 ∼ 100.

The olefin polymer according to the present invention may be an ethylene homopolymer or a copolymer including ethylene and a α-olefin-based comonomer. The α-olefin-based comonomer may be 1-butene, 1-pentene, 1-hexene, 4-methyl-1-pentene, 1-octene, 1-decene, 1-dodecene, 1-tetradecene, 1-hexadecene, 1-octadecene, 1-eicosene, and the like, however, it is not limited to these. Among these, a C₄-C₁₀ α-olefin is preferable, and one or more kinds of α-olefin may be used as the comonomer. The content of α-olefin-based comonomer in the copolymer is preferably 0.1 - 45 weight%, more preferably 0.1 - 20 weight%, and still more preferably 0.1 ∼ 4 weight%.

The weight average molecular weight of the olefin-based polymer according to the present invention is preferably 100,000 ∼ 200,000, however, it is not limited to this.

Since the olefin-based polymer according to the present invention is superior in the processibility, has the melt flow rate ratio (MFRR) value of proper range for the process, and is superior in the characteristics of high drawing and high tenacity, it can be used for preparing a fiber which is a high strength fiber.

In the high density olefin-based polymer, the narrower the molecular weight distribution, the higher the drawing ratio, and the high tenacity characteristic is revealed according to this. However, the processibility is not good when the molecular weight distribution is too narrow, and thus, it is important that the high density olefin-based polymer has proper molecular weight distribution value.

Since existing universal metallocene catalyst wase a single supported metallocene catalyst and the molecular weight distribution of the olefin-based polymers prepared by using the same was mostly 3 or less, the polymers could not secure high tenacity and proper processibility by high drawing ratio and could not be applied to a fiber product like a high strength fiber.

Hence, the present applicant developed the high density olefin-based polymer which can be prepared by using the supported metallocene catalyst and has not only the characteristics of high drawing and high tenacity but also superior processibility because of having proper molecular weight distribution.

In the olefin-based polymer according to the present invention, the polydisperse index (PDI; Mw/Mn) is preferably 2 ∼ 7, more preferably 3 ∼ 5, and still more preferably 3.5 - 4. The olefin-based polymer having said PDI value may be prepared by using the supported metallocene catalyst, and the supported metallocene catalyst is preferably a hybrid supported metallocene catalyst using two or more precursors.

In addition to, the method of preparing the olefin-based polymer according to the present invention is characterized in that it includes the step of polymerizing the olefin-based monomer in the presence of the supported metallocene catalyst.

In the preparation method of the olefin-based polymer according to the present invention, the supported metallocene catalyst may be injected in a form of slurry by diluting the same with a C₅-C₁₂ aliphatic hydrocarbon solvent such as isobutene, pentane, hexane, heptane, nonane, decane, and isomer thereof; a hydrocarbon solvent substituted by chlorine atom such as dichloromethane, and chlorobenzene. It is preferable to use the solvent after eliminating a small quantity of water, air, and the like which act as a catalytic poison with a small quantity of aluminum treatment.

The polymerization of the olefin-based monomer may be carried out **according to the usual way** by using a reactor selected from the group consisting of a continuous slurry polymerization reactor, a loop slurry reactor, a gas phase reactor, and a liquid phase reactor solely or in combination of two or more same or different reactors while continuously providing the olefin-based monomer in a constant ratio.

The polymerization temperature of the olefin-based monomer is preferably 25 ∼ 500°C, more preferably 25 ∼ 200°C, and still more preferably 50 ∼ 150°C. And, the polymerization pressure is preferably 1 ∼ 100 Kgf/cm², more preferably 1 ∼ 70 Kgf/cm², and still more preferably 5 ∼ 50 Kgf/cm².

The present invention also provides a fiber comprising the olefin-based polymer, and having the tenacity of 9 ∼ 12 gf/denier and the drawing ratio of 7 ∼ 14 times.

In the fiber according to the present invention, it is more preferable that the tenacity is 9 ∼ 11 gf/denier and the drawing ratio is 9 ∼ 13, however, it is not limited to this.

Existing general fibers have had the tenacity of just 4 ∼ 6 gf/denier and the drawing ratio of just 7 ∼ 9 times, but the fiber according to the present invention has the tenacity of 9 - 12 gf/denier and the drawing ratio of 7 ∼ 14 as disclosed above, and thus it can be recognized that the present fiber has very superior characteristics of high tenacity and high drawing.

Generally, a fiber like a monofilament product is required to have narrow molecular weight distribution in order to exhibit high tenacity, and the olefin-based polymer for monofilament is prepared by using a kind of catalyst precursor for realizing the narrow molecular weight distribution. In order to realize further stepped-up high tenacity, the present invention can further extend high molecular weight part in the molecular weight distribution of the olefin-based polymer by adding an additional catalyst, namely, by using the hybrid supported metallocene catalyst, during the preparation of the olefin-based polymer, and accordingly the mechanical property is improved and the tenacity can be strengthened.

In order to prepare the high tenacity fiber as disclosed above, the hybrid supported metallocene catalyst is preferably that the cocatalyst, the metallocene catalyst represented by Chemical Formula 1, and the metallocene catalyst represented by Chemical Formula 2 are supported on the supporting material.

The fiber according to the present invention is a high tenacity and light weight product, and the fiber is characterized in that the production cost can be saved and the product weight can be reduced, because the amount of resin spent for preparing a fiber having same tenacity can be reduced.

The present invention also provides a method of preparing the fiber, using a resin composition comprising the olefin-based, and including the step of extruding process by an extruder.

In the method of preparing the fiber according to the present invention, the resin composition comprising the olefin-based polymer may include other additives. As specific examples of the additives, there are a heat stabilizer, an antioxidant, a UV absorber, a light stabilizer, a metal inactivator, a filler, a reinforcing agent, a plasticizer, a lubricant, an emulsifier, a pigment, an optical bleach, a flame retardant, an antistatic agent, a foaming agent, and the like. The kinds of the additives are not limited particularly, and general additives known in the related art can be used.

The present invention also provides a product including the fiber.

Specific examples of the product including the fiber are the products which can be prepared by using the high strength fiber, there are monofilament products such as a rope, a fishing net, a safety net, a sports net, and the like, and tarpaulin products such as a cover, a gunny bag, a hose, a tent, and the like.

Hereinafter, the present invention provides preferable examples for illuminating the present invention, However, hollowing examples are only for understanding the present invention, and the range of the present invention is not limited to or by them.

### 〈EXAMPLES〉

### 〈CPREPARATION〉 OF CATALYST PRECURSOR〉

### 〈Preparation Example 1〉 Preparation of Metallocene Catalyst - Synthesis of [tBu-O-(CH₂)₆-C₅H₄]₂ZrCl₂

After preparing t-butyl-O-(CH₂)₆-Cl by using 6-chlorohexanol according to the method disclosed in the literature (Tetrahedron Lett. 2951 (1988)), t-butyl-O-(CH₂)₆-C₅H₅ was obtained by reacting NaCp hereto (yield 60%, b.p. 80°C / 0.1 mmHg). And, after dissolving t-butyl-O-(CH₂)₆-C₅H₅ in THF at -78°C, slowly adding n-butyl lithium (n-BuLi) thereto, and elevating the temperature to room temperature, it was reacted for 8 hours. The reacted lithium salt solution was slowly added to the suspension solution of ZrCl₄(THF)₂(1.70g, 4.50mmol)/THF(30ml) at -78°C, and it was further reacted at room temperature for 6 hours. All of volatile material was vacuum-dried, and the product was filtered after adding hexane solvent to the obtained oily liquid material. The filtered solution was vacuum-dried and hexane was added thereto and the precipitates was induced at low temperature (-20°C). The obtained precipitates were filtered at low temperature, and the [tBu-O-(CH₂)₆-C₅H₄]₂ZrCl₂ compound of white solid form was obtained (yield 92%).
¹H NMR(300MHz, CDCl₃) : 6.28(t, J = 2.6Hz, 2H), 6.19(t, J = 2.6Hz, 2H), 3.31 (t, 6.6Hz, 2H), 2.62(t, J = 8Hz), 1.7 - 1.3(m, 8H), 1.17(s, 9H).
¹³C NMR(CDCl₃): 135.09, 116.66, 112.28, 72.42, 61,52, 30.66, 30.61, 30.14, 29.18, 27.28, 26.00.

### 〈Preparation Example 2〉 Preparation of Metallocene Catalyst - Synthesis of [CH₃(CH₂)₃-C₅H₄]₂ZrCl₂

**After preparing** n-BuCp from n-butylchloride and NaCp, [CH₃(CH₂)₃-C₅H₄]₂ZrCl₂ was obtained by reacting ZrCl₄(THF)₂ hereto (yield 50%).

### 〈Preparation Example 3〉 Preparation of Metallocene Catalyst - Synthesis of [methyl(6-t-buthoxyhexyl)silyl(η⁵-tetramethy[Cp)(t-Butylamido)]TiCl₂

After adding 50g of Mg(s) to a 10L reactor, 300mL of THF was added thereto. After adding about 0.5g of l₂ thereto, the temperature of the reactor was maintained at 50°C. After the temperature of the reactor was stabilized, 250g of 6-t-buthoxyhexyl chloride was added to the reactor with the feeding speed of 5 mL/min by using a feeding pump. It was observed that the temperature of the reactor was elevated about 4 ∼ 5°C as 6-t-buthoxyhexyl chloride was added. The solution was stirred for 12 hours while continuously adding 6-t-buthoxyhexyl chloride thereto. After the reaction of 12 hours, the reacted black solution was obtained. After taking 2mL of the prepared black solution and obtaining the organic layer by adding water thereto, 6-t-buthoxyhexane was confirmed through ¹H-NMR, and it could be known from 6-t-buthoxyhexane that the Grignard reaction was properly progressed. And then, 6-t-buthoxyhexyl magnesium chloride was synthesized.

After adding 500g of MeSiCl₃ and 1L of THF to the reactor, the temperature of the reactor was cooled to -20°C. 560g of the synthesized 6-t-buthoxyhexyl magnesium was added to the reactor with the feeding speed of 5 mL/min by using a feeding pump. After the feeding of Grignard reagent was finished, it was stirred for 12 hours while elevating the temperature of the reactor slowly to room temperature. After the reaction of 12 hours, it was confirmed that white MgCl₂ salt was formed. The filter solution was obtained by adding 4L of hexane thereto and passing the same through a laboratory pressure dewatering filtration device (Labdori, HAN KANG ENG. CO., LTD.) for eliminating the salts. After adding the obtained filter solution to the reactor, the light yellow liquid was obtained by eliminating hexane at 70°C The obtained liquid could be identified as methyl(6-t-butoxyhexyl)dichlorosilane compound through ¹H-NMR.
¹H-NMR(COCb): 3.3(t, 2H), 1.5(m, 3H), 1.3(m, 5H), 1.2(s, 9H), 1.1(m, 2H), 0.7(s, 3H).

After adding 1.2 mole (150g) of tetramethylcyclopentadiene and 2.4L of THF to the reactor, the temperature of the reactor was cooled to -20°C. 480 mL of n-BuLi was added to the reactor with the feeding speed of 5 mL/min by using a feeding pump. After the addition of n-BuLi, the solution was stirred for 12 hours while elevating the temperature of the reactor slowly to room temperature. After the reaction of 12 hours, an equivalent of methyl(6-t-buthoxyhexyl)dichlorosilane (326g, 350mL) was rapidly added to the reactor. After stirring the same for 12 hours while elevating the temperature of the reactor slowly to room temperature, the temperature of the reactor was cooled to 0°C and 2 equivalent of t-BuNH₂was added thereto. The temperature of the reactor was slowly elevated to room temperature while stirring the same for 12 hours. After the reaction of 12 hours, THF was eliminated therefrom and 4L hexane was added thereto, and the filter solution from which the salts were eliminated could be obtained through Labdori. After adding the filter solution to the reactor again, the light yellow liquid was obtained by eliminating hexane at 70°C. The obtained yellow liquid could be identified as methyl(6-t-buthoxyhexyl)(tetramethylCpH)t-butylaminosilane compound through ¹H-NMR.

TiCl₃(THF)₃(10mmol) was rapidly added to the dilithium salt of the ligand of -78°C which was synthesized in THF solution from n-BuLi and dimethy](tetramethylCpH)t-butylaminosilane ligand. The reaction solution was stirred for 12 hours while elevating the temperature from -78°C to room temperature. After stirring 12 hours, an equivalent of PbCl₂(10mmol) was added to the reaction solution at room temperature and the bluish dark black solution was obtained. After eliminating THF from the prepared reaction solution, hexane was added thereto and the product was filtered. After eliminating hexane from the filter solution, it was identified through ¹H-NMR that desired [methyl(6-t-buthoxyhexyl)silyl(η⁵-tetramethylCp)(t-butylamido)]TiCl₂ was prepared.
¹H-NMR(CDCl₃): 3.3(s, 4H), 2.2(s, 6H), 2.1(s, 6HO, 1.8 - 0.8(m), 1.4(s, 9H), 1.2(s, 9H), 0.7(s, 3H)

### 〈PREPARATION OF SUPPORTED CATALYST〉

### 〈Preparation Example 4〉 Preparation of Supported Metallocene Catalyst (1)

Silica (product by Grace Davision Co., XPO 2412) was dehydrated in a vacuum state of 800°C for 15 hours. 1.0 g of silica was introduced to a glass reactor, and 10mL of toluene was added thereto. 5mL of 10 weight% methylaluminoxane (MAO)/toluene solution was added thereto and it was reacted at 40°C while stirring the same slowly. After then, it was washed with a sufficient amount of toluene for eliminating unreacted aluminum compound, and the remaining toluene was eliminated by decompression at 50°C. After feeding 10 mL of toluene again, 50mg of the metallocene compound synthesized in above Preparation Example 1 was added thereto and dissolved in toluene, and it was reacted for 1 hour. After the reaction was finished and the stirring was stopped, the separated toluene layer was eliminated and the rest was washed once with 20 mL toluene solution. After then, the solution was eliminated through filtering, and the rest was washed twice with toluene and dried by decompression so as to obtain solid powder.

### (Preparation Example 5〉 Preparation of Supported Metallocene Catalyst (2)

Silica (product by Grace Davision Co., XPO 2412) was dehydrated in a vacuum state of 800°C for 15 hours. 1.0 g of silica was introduced to a glass reactor, and 10mL of toluene was added thereto. 5mL of 10 weight% methylaluminoxane (MAO)/toluene solution was added thereto and it was reacted at 40°C while stirring the same slowly. After then, it was washed with a sufficient amount of toluene for eliminating unreacted aluminum compound, and the remaining toluene was eliminated by decompression at 50°C. After feeding 10 mL of toluene again, 50mg of the metallocene compound synthesized in above Preparation Example 2 was added thereto and dissolved in toluene, and it was reacted for 1 hour. After the reaction was finished and the stirring was stopped, the separated toluene layer was eliminated and the rest was washed once with 20 mL toluene solution. After then, the solution was eliminated through filtering, and the rest was washed three times with toluene and dried by decompression so as to obtain solid powder.

### 〈preparation Example 6〉 Preparation of Supported Metallocene Catalyst (3)

Silica (product by Grace Davision Co., XPO 2412) was dehydrated in a vacuum state of 800°C for 15 hours. After introducing 1.0 g of silica, 10mL of toluene, and 10 mL of toluene solution in which 50mg of the metallocene compound selected from above Preparation Example 1 was dissolved to a glass reactor, the solution was reacted at 90°C with stirring for 4 hours. After the reaction was finished and the stirring was stopped, the separated toluene layer was eliminated, the rest was washed three times with 10 mL toluene solution, and toluene was eliminated by decompression so as to obtain solid powder. Here, 5mL of methylaluminoxane (MAO)/toluene solution was added thereto and it was reacted at 40°C while stirring the same slowly. After then, it was washed with a sufficient amount of toluene for eliminating unreacted aluminum compound, and the remaining toluene was eliminated by decompressing the same at 50°C. The solid prepared like this may be used as a catalyst for olefin polymerization without further processing. To prepare the hybrid catalyst, the toluene solution in which 50 mg of metallocene compound prepared in Preparation Example 3 was added to the supported catalyst obtained above in the glass reactor and they were reacted at 40°C while stirring the same. After then, it was washed with a sufficient amount of toluene and vacuum-dried so as to obtain solid powder. The final catalyst prepared like this may be directly used for the polymerization, or may be used for the prepolymerization which is carried out at room temperature for 1 hour after feeding 30psig of ethylene for 2 minutes.

### 〈Preparation Example 7〉 Preparation of Supported Metallocene Catalyst (4)

Silica (product by Grace Davision Co., XPO 2410) was dehydrated in the vacuum state of 800°C for 15 hours. 1.0 g of silica was introduced to a glass reactor, and 10mL of toluene was added thereto. 5mL of 10 weight% methylaluminoxane (MAO)/toluene solution was added thereto and the solution was reacted at 40°C while stirring the same slowly. After then, the product was washed with a sufficient amount of toluene for eliminating unreacted aluminum compound, and the remaining toluene was eliminated by decompression at 50°C. After feeding 10 mL of toluene again, 50mg of the metallocene compound synthesized in above Preparation Example 3 was added thereto and dissolved in toluene, and it was reacted for 1 hour. After the reaction was finished and the stirring was stopped, the separated toluene layer was eliminated and the rest was washed once with 20 mL toluene solution. After then, 50 mg of the metallocene compound synthesized in Preparation Example 2 was dissolved in toluene and introduced thereto again and it was reacted for 1hour. After then, the solution was eliminated through filtering, and the rest was washed twice with hexane and dried by decompression so as to obtain solid powder.

### <PREPARATION OF POLYETHYLENE COPOLYMER AND EVALUATION ON THE CHARACTERISTICS>

Polyolefin copolymers of Examples 1 and 4 and Comparative Examples 1 to 4, 6, 9, 11 and 12 were prepared according to the usual way with individual condition in the polymerization reactor by using the supported metallocene catalysts prepared above. The evaluation items and the evaluation methods of the obtained polyolefin copolymers are as follows.

### <Base Material Properties>

1) Density: ASTM D 1505.
2) Melt index (MI, 2.16 kg/10min): measuring temperature 190°C ASTM D 1238.
3) MFRR(MFR₂₀/MFR₂): the ratio of MFR₂₀ melt index (Ml, 21.6kg load) per MFR₂(Ml, 2.16kg load).
4) Molecular Weight, Molecular Weight Distribution: measuring temperature 160°C; number average molecular weight, weight average molecular weight, Z average molecular weight were measured by using a gel permeation chromatography (GPC); molecular weight distribution was represented by the ratio of the weight average molecular weight per the number average molecular weight.
5) Content of Comonomer (weight%): measured by using ¹H-NMR.
6) SCB content (EA/1000TC): CSB content (unit: ea/1,000C) was measured by using SEC-FTIR (Size Exclusion Fourier Transform Infrared Spectroscope).

### 〈Product Properties〉

1) Tensile Strength at Yield Point (kg/cm²); Tensile Strength at Break (kg/cm²), Elongation at Break (%): measured by ASTM D 638 standard. At this time, the testing speed was 50 mm/min, and every specimen was measured six times and their average was taken.
2) Drawing Ratio (times): There is a drawing process for increasing the tenacity when processing a fiber (filament or yarn), and the ratio of drawing the fiber is the drawing ratio. The drawing ratio was measured by the ratio (RPM₂/RPM₁) of the rotational speed of winding roll (RPM₂) per the rotational speed of discharging roll (PRM₁).
3) Tenacity (g/denier): Tenacity means the strength at break of fiber, and it was measured according to ASTM D 638 standard. The testing speed was 200 mm/min, and every specimen was measured six times and their average was taken. For reference, denier is an international unit which is used for representing the thickness of the fiber, and 1 denier is what has the specific weight of 1 g per the standard length of 9,000m.

### 〈Product Processibility〉

1) Melt Pressure of Resin (bar): Extrusion test was carried out with the condition of 240 - 280°C(Temp. profile(°C): 240/260/270/280, Screw RPM: 40) by using Haake Single Screw Extruder (19 pi, L/D = 25). When the resin was extruded into pellets in said processing condition, the melt pressure of resin generated at the extruding part was measured.
2) Extruding Amount (kg/hr): Extrusion test was carried out with the condition of 240 ∼ 280°C(Temp. profile(°C): 240/260/270/280, Screw RPM: 40) by using Haake Single Screw Extruder (19 pi, L/D = 25). When the resin was extruded into pellets in said processing condition, the weight of the extruded resin per an hour was measured.

### 〈Examples 1〉

### (not according to the invention)

The supported metallocene catalyst (1) obtained from Preparation Example 4 was introduced to a single loop slurry polymerization process and the polyethylene was prepared according to the usual way. It was homopolymerized without using a comonomer. 750ppm of primary antioxidant (Irganox 1010, CIBA Co., Ltd.), 1,500ppm of secondary antioxidant (Irgafos 168, CIBA Co., Ltd.), and 3,000ppm of processing aid (SC110, Ca-St, DOOBON Inc.) were added to the obtained polyethylene polymer, and it was pelletized at the extruding temperature of 170 - 220°C by using a twin extruder (W&P Twin Screw Extruder, 75 pi, L/D = 36). The extruding test for the processibility of the resin was carried out in the condition of 240 - 280°C (Temp. profile(°C): 240/260/270/280) by using Haake Single Screw Extruder (19 pi, L/D = 25). In addition to, it was extruded into filaments with the extruding temperature of 240 ∼ 280°C(Temp. profile(°C): 240/260/270/280) by using a single extruder (EM Korea Co. Ltd., Monofilament M/C, 90 pi, L/D = 30) to meet the standard of 800 denier. The base material properties and the product properties of the polyethylene polymer were measured according to above evaluation methods of Examples and the results are listed in Tables 2 and 3.

### 〈Example 4〉

The supported metallocene catalyst (4) obtained from Preparation Example 7 was introduced to a single loop slurry polymerization process and the high density polyethylene was prepared according to the usual way. It was homopolymerized without using a comonomer. The evaluations on the base material properties and the product properties, and the product processibility of the polyethylene polymer obtained here were carried out according to the same method as in Example 1, and the evaluation results on the characteristics are listed in Tables 2 and 3.

### 〈Comparative Example 1〉

Zeigler-Natta catalyst (TiCl₄/MgCl₂) was introduced to a continuous 2-stage slurry polymerization process and the high density polyethylene was prepared according to the usual way. 1-Butene was used as the comonomer. The evaluations on the base material properties and the product properties, and the product processibility of the polyethylene polymer obtained here were carried out according to the same method as in Example 1, and the evaluation results on the characteristics are listed in Tables 2 and 3.

### 〈Comparative Example 2〉

Zeigler-Natta catalyst (TiCl₄/MgCl₂) was introduced to a single gas phase polymerization process and the high density polyethylene was prepared according to the usual way. 1-Butene was used as the comonomer. The evaluations on the base material properties and the product properties, and the product processibility of the polyethylene polymer obtained here were carried out according to the same method as in Example 1, and the evaluation results on the characteristics are listed in Tables 2 and 3.

### 〈Comparative Example 3〉

Chromium catalyst (Cr₂O₃/TiO₂/SiO₂) was introduced to a single loop slurry polymerization process and the high density polyethylene was prepared according to the usual way. 1-Hexene was used as the comonomer. The evaluations on the base material properties and the product properties, and the product processibility of the polyethylene polymer obtained here were carried out according to the same method as in Example 1, and the evaluation results on the characteristics are listed in Tables 2 and 3.

### 〈Comparative Example 4〉

Chromium catalyst (Cr₂O₃/TiO₂/SiO₂) was introduced to a single loop slurry polymerization process and the high density polyethylene was prepared according to the usual way. It was homopolymerized without using a comonomer. The evaluations on the base material properties and the product properties, and the product processibility of the polyethylene polymer obtained here were carried out according to the same method as in Example 1, and the evaluation results on the characteristics are listed in Tables 2 and 3.

### 〈Comparative Example 6〉

Existing supported metallocene catalyst that bis(n-butyl cyclopentadienyl) zirconium dichloride (n-BuCp)₂ZrCl₂) catalyst and methylaluminoxane (MAO) cocatalyst were supported on silica was introduced to a loop slurry polymerization process and the high density polyethylene was prepared according to the usual way. It was homopolymerized without using a comonomer. The evaluations on the base material properties and the product properties, and the product processibility of the polyethylene polymer obtained here were carried out according to the same method as in Example 1, and the evaluation results on the characteristics are listed in Tables 2 and 3.

### 〈Comparative Example 9〉

The supported metallocene catalyst (4) obtained in Preparation Example 7 was introduced to a single liquid phase polymerization process and the high density polyethylene was prepared according to the usual way. 1-Octene was used as the comonomer. The evaluations on the base material properties and the product properties, and the product processibility of the polyethylene polymer obtained here were carried out according to the same method as in Example 1, and the evaluation results on the characteristics are listed in Tables 2 and 3.

### 〈Comparative Example 11〉

The supported metallocene catalyst (3) obtained in Preparation Example 6 was introduced to a single slurry polymerization process and the high density polyethylene was prepared according to the usual way. It was homopolymerized without using a comonomer. The evaluations on the base material properties and the product properties, and the product processibility of the polyethylene polymer obtained here were carried out according to the same method as in Example 1, and the evaluation results on the characteristics are listed in Tables 2 and 3.

### 〈Comparative Example 12〉

The supported metallocene catalyst (1) obtained in Preparation Example 4 was introduced to a continuous 2-stage slurry polymerization process and the high density polyethylene was prepared according to the usual way. It was homopolymerized without using a comonomer. The evaluations on the base material properties and the product properties, and the product processibility of the polyethylene polymer obtained here were carried out according to the same method as in Example 1, and the evaluation results on the characteristics are listed in Tables 2 and 3.

**[Table 1]**

| | Catalyst Used | Polymerization Process | Comonomer |
|---|---|---|---|
| Example 1 not according to the invention | Supported metallocene catalyst (1) | Loop slurry | - |
| Example 4 | Supported metallocene catalyst | Loop slurry | - |
| | (4) | | |
| Comparative Example 1 | Zeigler-Natta catalyst | Slurry | 1-Butene |
| Comparative Example 2 | Zeigler-Natta catalyst | Gas phase | 1-Butene |
| Comparative Example 3 | Chromium catalyst | Loop slurry | 1-Hexene |
| Comparative Example 4 | Chromium catalyst | Loop slurry | - |
| Comparative Example 6 | Supported metallocene catalyst | Slurry | - |
| Comparative Example 9 | Supported metallocene catalyst (4) | Liquid phase | 1-Octene |
| Comparative Example 11 | Supported metallocene catalyst (3) | Slurry | - |
| Comparative Example 12 | Supported metallocene catalyst (1) | Slurry | - |

**[Table 2]**

| | Density (g/cm3 ) | MI (2.16k g) | MFRR | PDI (Mw/Mn) | Mw | Mn | Comonomer content (weight&) | SBC content (EA/1000TC) |
|---|---|---|---|---|---|---|---|---|
| Example 1 not according to the invention | 0.9501 | 0.50 | 17 | 2.45 | 123,40 0 | 50,40 0 | - | - |
| Example 4 | 0.9550 | 0.50 | 28 | 3.50 | 142,10 0 | 39,50 0 | - | |
| Comparative Example 1 | 0.9503 | 0.72 | 50 | 7.18 | 127,50 0 | 17,80 0 | 1.3 | 3.2 |
| Comparative Example 2 | 0.9562 | 0.82 | 53 | 7.43 | 118,50 0 | 15,90 0 | 0.9 | 2.1 |
| Comparative Example 3 | 0.9507 | 0.84 | 67 | 11.48 | 115,40 0 | 10,10 0 | 1.4 | 2.3 |
| Comparative Example 4 | 0.9630 | 0.67 | 110 | 15.2 | 135,00 0 | 8,900 | - | - |
| Comparative Example 6 | 0.9500 | 1.02 | 14 | 2.20 | 94,000 | 42,72 7 | - | - |
| Comparative Example 9 | 0.9460 | 0.54 | 29 | 3.71 | 140,20 0 | 37,80 0 | 1.5 | 1.6 |
| Comparative Example 11 | 0.9592 | 0.67 | 46 | 5.59 | 130,60 0 | 23,40 0 | - | - |
| Comparative Example 12 | 0.9601 | 0.59 | 48 | 6.76 | 140,90 0 | 20,80 0 | - | - |

**[Table 3]**

| Classifications | Resin Properties | | | Fiber product properties | | Processibility | |
|---|---|---|---|---|---|---|---|
| Property items | Tensile strength at yield point (kg/cm2 | Tensile strength at break (kg/cm2) | Elongation at break (%) | Drawing ratio (times) | Tenacity (gf/denier) | Extruding amount (kg/hr) | Melt pressure of resin (bar) |
| Example 1 not according to the invention | 258 | > 380 | > 1100 | 13.0 | 9.1 | 16.0 | 80.9 |
| Example 4 | 300 | > 400 | > 1100 | 11.5 | 9.3 | 19.0 | 68.7 |
| Comparative Example 1 | 263 | 340 | 800 | 7.5 | 4.5 | 26.0 | 46.0 |
| Comparative Example 2 | 300 | 330 | 700 | 7.0 | 4.0 | 26.6 | 44.0 |
| Comparative Example 3 | 265 | 340 | 640 | 6.5 | 3.5 | 27.9 | 40.7 |
| Comparative Example 4 | 320 | 360 | 610 | 6.0 | 4.0 | 29.4 | 35.1 |
| Comparative Example 6 | 255 | > 380 | > 1100 | 10.0 | 6.2 | 12.6 | 98.7 |
| Comparative Example 9 | 248 | > 370 | > 1100 | 11.0 | 7.7 | 21.0 | 67.1 |
| Comparative Example 11 | 308 | 380 | 720 | 9.5 | 6.4 | 25.1 | 55.2 |
| Comparative Example 12 | 311 | 340 | 700 | 8.5 | 5.2 | 26.5 | 50.0 |

As known from Tables 1∼3, the polyethylene polymer obtained from Example 1 was prepared by using the single supported metallocene catalyst and its molecular weight distribution is very narrow, and the drawing ratio of the fiber product is very large and the tenacity is very excellent accordingly. However, it has the characteristic of low density even though it is a homo polymer product because it has small low molecular portion due to the narrow molecular weight distribution. Even though it has high drawing characteristic due to the very narrow molecular distribution, it shows somewhat low tenacity in comparison with the high density products of Example 4. Meanwhile, it may be somewhat inferior in the processibility and the productivity because it has narrow molecular distribution, low melt index, and low melt flow rate.

The polyethylene polymer obtained from Example 4 was prepared by using the hybrid supported metallocene catalyst (4) of Preparation Example 7 and it has narrow molecular weight distribution and high density characteristic, and thus the drawing ratio and the tenacity are very excellent. Furthermore, the molecular weight distribution and the weight average molecular weight are in the proper range, and thus it has an advantage of maintaining the high tenacity and the favorable processibility. Since the molecular weight distribution is relatively wider than Example 1 and the low molecular weight portion increases, it is possible to prepare the high density polymer by homopolymerization and the tenacity can be strengthened by the high density. However, as shown in Comparative Examples 11∼12, when the molecular weight distribution becomes wider, the higher density polymer can be prepared by homopolymerization but the decrease in tenacity due to the decrease in drawing ratio is inevitable because the molecular weight it too broad. The product of Example 4 is positioned in the optimized range of molecular weight distribution, molecular weight, and density, and thus it can show superior mechanical properties, processibility, and productivity at the same time.

The polyethylene copolymer of Comparative Example 1 was prepared by using Zeigler-Natta catalyst in the continuous 2-stage slurry polymerization process, and it has relatively low density because it has wide molecular weight distribution and uses 1-butene as the comonomer. Because of such product specifications, it has a disadvantage of that the drawing ratio and the tenacity of the fiber are inferior to the Examples.

The polyethylene copolymer of Comparative Example 2 was prepared by using the Zeigler-Natta catalyst in the single gas phase polymerization process, it has a disadvantage of that the drawing ratio and the tenacity of the fiber are inferior due to the wide molecular weight distribution.

The polyethylene copolymer of Comparative Example 3 was prepared by using the chromium catalyst in the loop slurry polymerization process, and it has wide molecular weight distribution. Generally, it has been widely known that polyethylene prepared by chromium catalyst can realize very wide molecular weight distribution even with a single reactor and it shows excellent processibility. However, such wide molecular weight distribution acts as the cause of the decrease in drawing ratio and tenacity of the fiber.

The polyethylene copolymer of Comparative Example 4 was prepared by using the chromium catalyst in the single loop slurry polymerization process and it was a homopolymer product without using a comonomer. It can easily realize high density due to very wide molecular weight distribution, but it involves a disadvantage of decreasing the drawing ratio and the tenacity of the fiber.

The polyethylene copolymer of Comparative Example 6 was prepared by using the supported metallocene catalyst in the loop slurry polymerization process and it has extremely narrow molecular weight distribution. Because of such extremely narrow molecular weight distribution, the processibility and the extrusion output are very inferior and it has high risk of fiber breaking in the drawing process because the melt fracture occurs severely during the extrusion process. Because of such very inferior processibility, it is difficult to realize high drawing ratio, and the tenacity is decreased too by the decrease in drawing ratio. Furthermore, even though it is a homoppolymer product, there is a limitation for realizing high density due to the narrow molecular weight distribution. Therefore, it has very improper product specifications for fiber products because of the inferior processibility and the limitation of the mechanical properties according to this.

The polyethylene copolymer obtained from Comparative Example 9 was prepared by using 1-octene as the comonomer, and the tenacity of the fiber is relatively decreased.

The polyethylene polymers obtained from Comparative Example11 was prepared by using the hybrid supported metallocene catalyst (3) of Preparation Example 6, and they may be relatively superior in the processibility and the productivity because their molecular weight distributions are wide and the melt flow rates are large in comparison with Examples 1and 4. However, the product of higher density range can be prepared in homopolymerization as the molecular weight distribution is wider but there is a tendency of decrease in tenacity of fiber due to decrease in drawing ratio.

The polyethylene polymers obtained from Comparative Example 12 was prepared by introducing the single supported metallocene catalyst into the continuous 2-stage slurry polymerization process, its molecular weight distribution is wide and the density of the homopolymer product is highly formed in comparison with the products having narrower molecular weight distribution. It may be superior in the processibility because of its wide molecular weight distribution but it shows very inferior drawing ratio and fiber tenacity inspite of the high density.

## Claims

1. Use for preparing a fiber of an ethylene homopolymer, of which:
1) the density is 0.948 ∼ 0.958 g/cm³, measured according to ASTM D 1505
2) the melt index (Ml; 190°C, 2.16kg) is 0.4 ∼ 1.5 g/10min, measured according to ASTM D 1238
3) the polydispersity index (PDI; Mw/Mn) is 2 ∼ 5,
4) the weight average molecular weight of the olefin-based polymer is 100,000 ∼ 200,000, measured by GPC as described in the experimental section of the description, and
5) the melt flow rate ratio (MFRR) of the ethylene homopolymer is 20 ∼ 40, wherein the tenacity of the fiber is 9 ∼ 12 gf/denier, measured according to ASTM D 638, and the drawing ratio as described in the experimental section of the description, of the fiber is 7 ∼ 14.

2. The use according to Claim 1, wherein the melt index (MI; 190 °C , 2.16kg) of the ethylene homopolymer is 0.4 ∼ 1 g/10min, and the polydispersity index (PDI; Mw/Mn) of the ethylene homopolymer is 3 ∼ 5.

3. A method of preparing an ethylene homopolymer according to claim 1, including the step of polymerizing an ethylene in the presence of a supported metallocene catalyst,
wherein the supported metallocene catalyst includes at least one metallocene catalysts selected from the group consisting of the Chemical Formulae 1 to 4 supported on a supporting material:
[Chemical Formula 1] (CpR1)ₙ(Cp'R2)MQ₃₋ₙ
in Chemical Formula 1,
M is a group 4 transition metal;
Cp and Cp' are same or different each other, and independently selected from the group consisting of cyclopentadienyl, indenyl, 4,5,6,7-tetahydro-1-indenyl, and fluorenyl radicals, and these may be substituted by a C₁-C₂₀ hydrocarbon;
R1 and R2 are same or different each other, and independently hydrogen; a C₁-C₂₀ alkyl; a C₁-C₁₀ alkoxy; a C₆-C₂₀ aryl; a C₆-C₁₀ aryloxy; a C₂-C₂₀ alkenyl; a C₇-C₄₀ alkylaryl; a C₇-C₄₀ arylalkyl; a C₈-C₄₀ arylalkenyl; or a C₂-C₁₀ alkynyl;
Q is a halogen atom; a C₁-C₂₀ alkyl; a C₂-C₁₀ alkenyl; a C₇-C₄₀ alkylaryl; a C₇-C₄₀ arylalkyl; a C₆-C₂₀ aryl; a substituted or unsubstituted C₁-C₂₀ alkylidene; a substituted or unsubstituted amino group; a C₂-C₂₀ alkylalkoxy; or a C₇-C₄₀ arylalkoxy; and
n is 1 or 0, 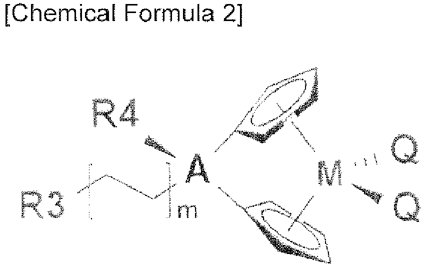
in Chemical Formula 2,
M is a group 4 transition metal;
R3 and R4 are same or different each other, and independently hydrogen, a C₁-C₂₀ alkyl, a C₂-C₂₀ alkenyl, a C₆-C₂₀ aryl, a C₇-C₄₀ alkylaryl, a C₇-C₄₀ arylalkyl, a C₁-C₂₀ alkylsilyl, a C₆-C₂₀ arylsilyl, methoxymethyl, t-butoxymethyl, tetrahydropyranyl, tetrahydrofuranyl, 1-ethoxyethyl, 1-methyl-1-methoxyethyl, or t-butyl;
A is at least one selected from the group consisting of a C₂-C₄ alkylene; a C₁-C₄ alkyl silicone or germanium; and a C₁-C₄ alkyl phosphine or amine;
Q is same or different each other, and independently a halogen atom; a C₁-C₂₀ alkyl; a C₂-C₁₀ alkenyl; a C₇-C₄₀ alkylaryl; a C₇-C₄₀ arylalkyl; a C₆-C₂₀ aryl; a substituted or unsubstituted C₁-C₂₀ alkylidene; a substituted or unsubstituted amino group; a C₂-C₂₀ alkylalkoxy; or a C₇-C₄₀ arylalkoxy; and
m is an integer of 0 to 10, 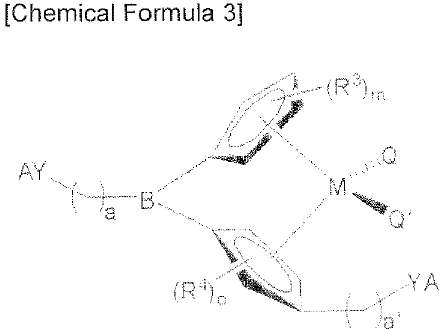 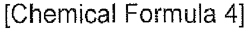 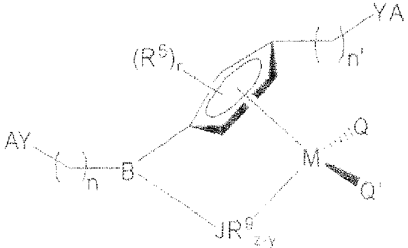
in Chemical Formulae 3 and 4,
M is a group 4 transition metal on the periodic table;
R³, R⁴, and R⁵ are same or different each other, and independently a C₁-C₂₀ alkyl radical, a C₂-C₂₀ alkenyl radical, a C₃-C₃₀ cycloalkyl radical, a C₆-C₃₀ aryl radical, a C₇-C₃₀ alkylaryl radical, a C₇-C₃₀ arylalkyl radical, or a C₈-C₃₀ arylalkenyl radical;
Q and Q' are same or different each other, and independently a halogen radical, a C₁-C₂₀ alkyl radical, a C₂-C₁₀ alkenyl radical, a C₆-C₃₀ aryl radical, a C₇-C₃₀ alkylaryl radical, or a C₇-C₃₀ arylalkyl radical, and Q and Q' may form a C₁-C₂₀ hydrocarbon ring together;
B is a C₁-C₄ alkylene radical, dialkyl silicone, germanium, alkyl phosphine, or amine, which is a bridge for connecting two cyclopentadienyl-based ligands or cyclopentadienyl-based ligand and JR⁹_{z-y} by covalent bonds;
R⁹ is hydrogen radical, a C₁-C₂₀ alkyl radical, a C₂-C₂₀ alkenyl radical, a C₆-C₃₀ aryl radical, a C₇-C₃₀ alkylaryl radical, or a C₇-C₃₀ arylalkyl radical;
J is a group 15 element or a group 16 element on the periodic table;
z is an oxidation number of element J;
y is a bond number of element J;
a, a', n, and n' are same or different each other, and independently positive integers larger than 0;
m is an integer of 0 ∼ 3;
o is an integer of 0 ∼ 2;
r is an integer of 0 ∼ 2;
Y represents a hetero atom of O, S, N, or P; and
A represents hydrogen, or a C₁-C₁₀ alkyl radical.

4. The method according to Claim 3, wherein the supported metallocene catalyst is a hybrid supported metallocene catalyst that two or more different metallocene catalysts are supported on a supporting material.

5. The method according to Claim 3, wherein the supported metallocene catalyst further includes a compound selected from the group consisting of the cocatalyst compounds represented by Chemical Formulae 7 to 9:
[Chemical Formula 7] -[Al(R8)-0]ₙ-
in Chemical Formula 7,
R8 is same or different each other, and independently a halogen; a C₁-C₂₀ hydrocarbon; or a halogen-substituted C₁-C₂₀ hydrocarbon; and
n is an integer of 2 or more;
[Chemical Formula 8] D(R8)₃
in Chemical Formula 8,
R8 is same as that in Chemical Formula 7; and
D is aluminum or boron; 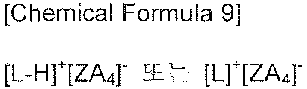
in Chemical Formula 9,
L is a neutral or cationic Lewis acid;
H is hydrogen atom;
Z is a group 13 element; and
A is same or different each other, and independently a C₆-C₂₀ aryl group or a C₁-C₂₀ alkyl group of which at least one hydrogen atoms may be substituted by a halogen, a C₁-C₂₀ hydrocarbon, alkoxy, or phenoxy.

6. The method according to Claim 3, wherein the polymerization of the ethylene is carried out by using a reactor selected from the group consisting of a continuous slurry polymerization reactor, a loop slurry reactor, a gas phase reactor, and a liquid phase reactor solely or in combination of two or more same or different reactors.

7. A fiber, comprising the ethylene homopolymer according to Claim 1.

8. The fiber according to Claim 7, wherein the tenacity of the fiber is 9 ∼ 12 gf/denier and the drawing ratio is 7 ∼ 14 times.

9. The fiber according to Claim 7, wherein the tenacity of the fiber is 9 ∼ 11 gf/denier and the drawing ratio is 9 ∼ 13 times.

10. A method of preparing a fiber, using a resin composition comprising the ethylene homopolymer according to Claim 1, and including the step of extruding process by an extruder.

11. A product, including the fiber according to Claim 7.

12. The product according to Claim 11, which is a monofilament product, or a tarpaulin product.

## Patentansprüche

1. Verwendung zur Herstellung einer Faser eines Ethylenhomopolymers, wobei:
1) dessen Dichte 0,948 ∼ 0,958 g/cm³ ist, gemessen gemäß ASTM D 1505,
2) dessen Schmelzindex (MI; 190°C, 2,16 kg) 0,4 ∼ 1,5 g/10 min. ist, gemessen gemäß ASTM D 1238,
3) dessen Polydispersitätsindex (PDI; Mw/Mn) 2 ∼ 5 ist,
4) das Gewichtsmittelmolekulargewicht des Polymers auf Olefinbasis 100.000 ∼ 200.000 ist, gemessen durch GPC wie im experimentellen Abschnitt der Beschreibung beschrieben, und
5) das Schmelzflussratenverhältnis (MFRR) des Ethylenhomopolymers 20 ∼ 40 ist, wobei die Tenazität der Faser 9 ∼ 12 gf/Denier ist, gemessen gemäß ASTM D 638, und wobei das Ziehverhältnis, wie beschrieben im experimentellen Abschnitt der Beschreibung, der Faser 7 ∼ 14 ist.

2. Verwendung nach Anspruch 1, wobei der Schmelzindex (MI; 190°C, 2,16 kg) des Ethylenhomopolymers 0,4 ∼ 1 g/10 min ist und der Polydispersitätsindex (PDI; Mw/Mn) des Ethylenhomopolymers 3 ∼ 5 ist.

3. Verfahren zum Herstellen eines Ethylenhomopolymers nach Anspruch 1, einschließend den Schritt eines Polymerisierens eines Ethylens in der Gegenwart eines geträgerten Metallocenkatalysators,
wobei der geträgerte Metallocenkatalysator wenigstens einen Metallocenkatalysator einschließt, der ausgewählt ist aus der Gruppe bestehend aus den chemischen Formeln 1-4, geträgert auf einem Trägermaterial:
[Chemische Formel 1] (CpR1)ₙ(Cp'R2)MQ₃₋ₙ
wobei in chemischer Formel 1
M ein Übergangsmetall der Gruppe 4 ist;
Cp und Cp' gleich oder verschieden voneinander sind und unabhängig ausgewählt sind aus der Gruppe bestehend aus Cyclopentadienyl-, Indenyl-, 4,5,6,7-Tetrahydro-1-indenyl- und Fluorenylresten und diese substituiert sein können durch einen C₁-C₂₀-Kohlenwasserstoff;
R₁ und R₂ gleich oder verschieden voneinander sind und unabhängig Wasserstoff; ein C₁-C₂₀-Alkyl; ein C₁-C₁₀-Alkoxy; ein C₆-C₂₀-Aryl; ein C₆-C₁₀-Aryloxy; ein C₂-C₂₀-Alkenyl; ein C₇-C₄₀-Alkylaryl; ein C₇-C₄₀-Arylalkyl; ein C₈-C₄₀-Arylalkenyl; oder ein C₂-C₁₀-Alkinyl sind;
Q ein Halogenatom; ein C₁-C₂₀-Alkyl; ein C₂-C₁₀-Alkenyl; ein C₇-C₄₀-Alkylaryl; ein C₇-C₄₀-Arylalkyl; ein C₆-C₂₀-Aryl; ein substituiertes oder unsubstituiertes C₁-C₂₀-Alkyliden; eine substituierte oder unsubstituierte Aminogruppe; ein C₂-C₂₀-Alkylalkoxy; oder ein C₇-C₄₀-Arylalkoxy ist; und
n 1 oder 0 ist, 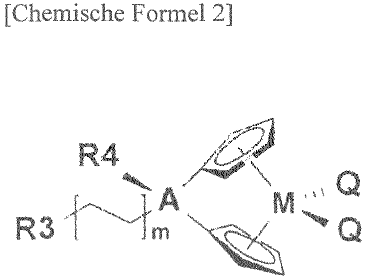
wobei in chemischer Formel 2
M ein Übergangsmetall der Gruppe 4 ist;
R3 oder R4 gleich oder verschieden voneinander sind und unabhängig Wasserstoff, ein C₁-C₂₀-Alkyl, ein C₂-C₂₀-Alkenyl, ein C₆-C₂₀-Aryl, ein C₇-C₄₀-Alkylaryl, ein C₇-C₄₀-Arylalkyl, ein C₁-C₂₀-Alkylsilyl, ein C₆-C₂₀-Arylsilyl, Methoxymethyl, t-Butoxymethyl, Tetrahydropyranyl, Tetrahydrofuranyl, 1-Ethoxyethyl, 1-Methyl-1-methoxyethyl oder t-Butyl sind;
A wenigstens eines ausgewählt aus der Gruppe, bestehend aus einem C₂-C₄-Alkylen; einem C₁-C₄-Alkylsilikon oder -Germanium; und einem C₁-C₄-Alkylphosphin oder - amin, ist;
Q gleich oder verschieden voneinander ist und unabhängig ein Halogenatom; ein C₁-C₂₀-Alkyl; ein C₂-C₁₀-Alkenyl; ein C₇-C₄₀-Alkylaryl; ein C₇-C₄₀-Arylalkyl; ein C₆-C₂₀-Aryl; ein substituiertes oder unsubstituiertes C₁-C₂₀-Alkyliden; eine substituierte oder unsubstituierte Aminogruppe; ein C₂-C₂₀-Alkylalkoxy; oder ein C₇-C₄₀-Aryloxy ist; und
m eine ganze Zahl von 0 bis 10 ist, 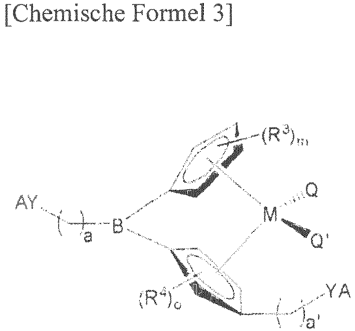 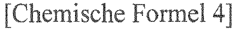 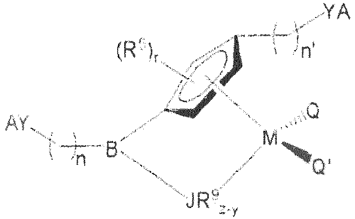
wobei in chemischen Formeln 3 und 4
M ein Übergangsmetall der Gruppe 4 des Periodensystems ist;
R³, R⁴ und R⁵ gleich oder verschieden voneinander sind und unabhängig ein C₁-C₂₀-Alkylrest, ein C₂-C₂₀-Alkenylrest, ein C₃-C₃₀-Cycloalkylrest, ein C₆-C₃₀-Arylrest, ein C₇-C₃₀-Alkylarylrest, ein C₇-C₃₀-Arylalkylrest oder C₈-C₃₀-Arylalkenylrest sind;
Q und Q' gleich oder verschieden voneinander sind und unabhängig ein Halogenrest, ein C₁-C₂₀-Alkylrest, ein C₂-C₁₀-Alkenylrest, ein C₆-C₃₀-Arylrest, ein C₇-C₃₀-Alkylarylrest oder ein C₇-C₃₀-Arylalkylrest sind und Q und Q' einen C₁-C₂₀-Kohlenwasserstoffring zusammen bilden können;
B ein C₁-C₄-Alkylenrest, Dialkylsilikon, Germanium, Alkylphosphin oder -amin ist, welches eine Brücke ist zum Verbinden von zwei Liganden auf Cyclopentadienylbasis oder einem Liganden auf Cyclopentadienylbasis und JR⁹_{z-y} durch kovalente Bindungen;
R₉ Wasserstoffrest, ein C₁-C₂₀-Alkylrest, ein C₂-C₂₀-Alkenylrest, ein C₆-C₃₀-Arylrest, ein C₇-C₃₀-Alkylarylrest oder ein C₇-C₃₀-Arylalkylrest ist;
J ein Element der Gruppe 15 oder ein Element der Gruppe 16 des Periodensystems ist;
z eine Oxidationszahl von Element J ist;
y eine Bindungszahl von Element J ist;
a, a', n und n' gleich oder verschieden voneinander sind und unabhängig positive ganze Zahlen größer als 0 sind;
m eine ganze Zahl von 0 ∼ 3 ist;
o eine ganze Zahl von 0 ∼ 2 ist;
r eine ganze Zahl von 0 ∼ 2 ist;
Y ein Heteroatom aus O, S, N oder P darstellt; und
A Wasserstoff oder einen C₁-C₁₀-Alkylrest darstellt.

4. Verfahren nach Anspruch 3, wobei der geträgerte Metallocenkatalysator ein geträgerter Hybridmetallocenkatalysator ist, wobei zwei oder mehr unterschiedliche Metallocenkatalysatoren auf einem Trägermaterial geträgert sind.

5. Verfahren nach Anspruch 3, wobei der geträgerte Metallocenkatalysator ferner eine Verbindung einschließt, die ausgewählt wird aus der Gruppe bestehend aus den Cokatalysatorverbindungen, die durch chemische Formeln 7 bis 9 dargestellt werden:
[Chemische Formel 7] -[Al(R8)-O]ₙ-
wobei in chemischer Formel 7
R8 gleich oder verschieden voneinander ist und unabhängig ein Halogen; ein C₁-C₂₀-Kohlenwasserstoff; oder ein Halogen-substituierter C₁-C₂₀-Kohlenwasserstoff ist; und
n eine ganze Zahl von 2 oder höher ist;
[Chemische Formel 8] D(R8)₃
wobei in chemischer Formel 8
R8 das gleiche ist wie in chemischer Formel 7; und
D Aluminium oder Bor ist; 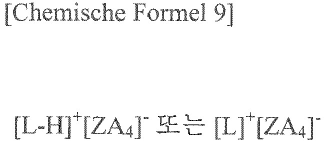
wobei in chemischer Formel 9
L eine neutrale oder kationische Lewis-Säure ist;
H ein Wasserstoffatom ist;
Z ein Element der Gruppe 13 ist; und
A gleich oder verschieden voneinander ist, und unabhängig eine C₆-C₂₀-Arylgruppe oder eine C₁-C₂₀-Alkylgruppe ist, dessen wenigstens ein Wasserstoffatom substituiert sein kann durch ein Halogen, einen C₁-C₂₀-Kohlenwasserstoff, Alkoxy oder Phenoxy.

6. Verfahren nach Anspruch 3, wobei die Polymerisation des Ethylens durchgeführt wird durch Verwendung eines Reaktors ausgewählt aus der Gruppe, bestehend aus einem kontinuierlichen Slurry-Polymerisationsreaktor, einem Schlaufenslurry-Reaktor, einem Gasphasenreaktor und einem Flüssigphasenreaktor, allein oder in Kombination aus zwei oder mehreren der gleichen oder unterschiedlichen Reaktoren.

7. Faser umfassend das Ethylenhomopolymer nach Anspruch 1.

8. Faser nach Anspruch 7, wobei die Tenazität der Faser 9 ∼ 12 gf/Denier ist und das Ziehverhältnis 7 ∼ 14-fach ist.

9. Faser nach Anspruch 7, wobei die Tenazität der Faser 9 ∼ 11 gf/Denier ist und das Ziehverhältnis 9 ∼ 13-fach ist.

10. Verfahren zum Herstellen einer Faser unter Verwendung einer Harzzusammensetzung umfassend das Ethylenhomopolymer nach Anspruch 1 und einschließend den Schritt eines Extrudierverfahrens durch einen Extruder.

11. Produkt einschließend die Faser nach Anspruch 7.

12. Produkt nach Anspruch 11, welches ein Monofilamentprodukt oder ein Tarpaulinprodukt ist.

## Revendications

1. Utilisation pour la préparation d'une fibre d'un homopolymère d'éthylène, dont :
1) la densité est de 0,948 à 0,958 g/cm³, mesurée selon ASTM D 1505
2) l'indice de fusion (MI ; 190°C, 2,16 kg) est de 0,4 à 1,5 g/10 min, mesuré selon ATSM D 1238
3) l'indice de polydispersité (PDI ; Mw/Mn) est de 2 à 5,
4) le poids moléculaire moyen en poids du polymère à base d'oléfines est de 100.000 à 200.000 mesuré par GPC comme décrit dans la section expérimentale de la description, et
5) le rapport des indices de fluidité à chaud (MFRR) de l'homopolymère d'éthylène est de 20 à 40, la ténacité de la fibre étant de 9 à 12 g/denier, mesurée selon ASTM D 638 et le rapport d'étirage tel que décrit dans la section expérimentale de la description de la fibre étant de 7 à 14.

2. Utilisation selon la Revendication 1, dans laquelle l'indice de fusion (MI ; 190°C, 2,16 kg) de l'homopolymère d'éthylène est de 0,4 à 1 g/10 min et l'indice de polydispersité (PDI ; Mw/Mn) de l'homopolymère d'éthylène est de 3 à 5.

3. Procédé de préparation de l'homopolymère d'éthylène selon la revendication 1, comprenant l'étape de polymérisation d'un éthylène en présence d'un catalyseur métallocène sur support,
dans lequel le catalyseur métallocène sur support comprend au moins un catalyseur métallocène sélectionné dans le groupe constitué des formules chimiques 1 à 4 supporté sur une matière de support :
[Formule chimique 1] (CpR1)ₙ(Cp'R2)MQ₃₋ₙ
dans la formule chimique 1,
M représente un métal de transition du groupe 4 ;
Cp et Cp' sont identiques ou différents l'un de l'autre et sont indépendamment sélectionnés dans le groupe constitué de cyclopentadiényle, d'indényle, de 4,5,6,7-tétahydro-1-indényle, et de radicaux de fluorényle, et ceux-ci peuvent être substitués par un hydrocarbure en C₁ à C₂₀ ;
R1 et R2 sont identiques ou différents l'un de l'autre et représentent indépendamment l'hydrogène ; un alkyle en C₁ à C₂₀ ; un alcoxy en C₁ à C₁₀, un aryle en C₆ à C₂₀, un aryloxy en C₆ à C₁₀ ; un alcényle en C₂ à C₂₀ ; un alkylaryle en C₇ à C₄₀ ; un arylalkyle en C₇ à C₄₀ ; un arylalcényle en C₈ à C₄₀ ; ou un alcynyle en C₂ à C₁₀ ;
Q représente un atome d'halogène ; un alkyle en C₁ à C₂₀ ; un alcényle en C₂ à C₁₀ ; un alkylaryle en C₇ à C₄₀ ; un arylalkyle en C₇ à C₄₀ ; un aryle en C₆ à C₂₀ ;
un alkylidène en C₁ à C₂₀ substitué ou non substitué ; un groupe amino substitué ou non substitué ; un alkylalcoxy en C₂ à C₂₀ ; ou un arylalcoxy en C₇ à C₄₀ ; et
n vaut 1 ou 0, 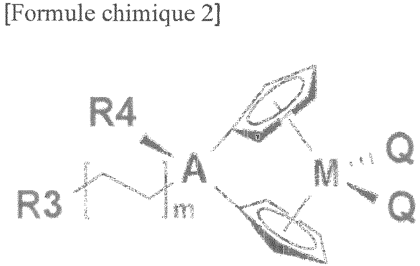
dans la formule chimique 2,
M représente un métal de transition du groupe 4 ;
R3 et R4 sont identiques ou différents l'un de l'autre et représentent indépendamment l'hydrogène, un alkyle en C₁ à C₂₀, un alcényle en C₂ à C₂₀, un aryle en C₆ à C₂₀, un alkylaryle en C₇ à C₄₀, un arylalkyle en C₇ à C₄₀, un alkylsilyle en C₁ à C₂₀, un arylsilyle en C₆ à C₂₀, un méthoxyméthyle, un t-butoxyméthyle, un tétrahydropyranyle, un tétrahydrofuranyle, un 1-éthoxyéthyle, un 1-méthyl-1-méthoxyéthyle ou un t-butyle.
A représente un composé au moins sélectionné dans le groupe constitué d'un alkylène en C₂ à C₄ ; d'un alkyl-silicone ou germanium en C₁ à C₄ ; et d'un alkyl-phosphine ou -amine en C₁ à C₄ ;
Q est identique ou différent l'un de l'autre et représente indépendamment un atome d'halogène ; un alkyle en C₁ à C₂₀ ; un alcényle en C₂ à C₁₀ ; un alkylaryle en C₇ à C₄₀ ; un arylalkyle en C₇ à C₄₀ ; un aryle en C₆ à C₂₀ ; un alkylidène en C₁ à C₂₀ substitué ou non substitué ; un groupe amino substitué ou non substitué ; un alkylalcoxy en C₂ à C₂₀ ; ou un arylalcoxy en C₇ à C₄₀ ; et
m représente un nombre entier valant de 0 à 10, 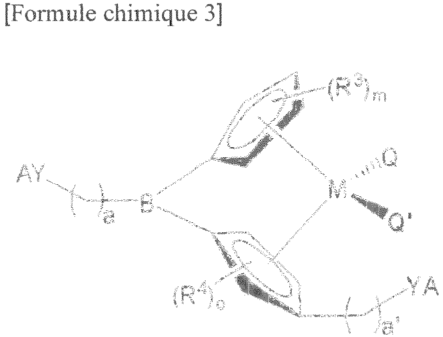 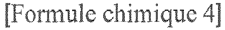 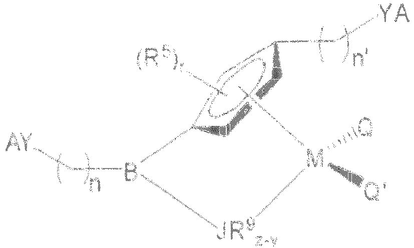
dans les formules chimiques 3 et 4,
M représente un métal de transition du groupe 4 du tableau périodique des éléments ;
R³, R⁴ et R⁵ sont identiques ou différents les uns des autres et représentent indépendamment un radical alkyle en C₁ à C₂₀, un radical alcényle en C₂ à C₂₀, un radical cycloalkyle en C₃ à C₃₀, un radical aryle en C₆ à C₃₀, un radical akylaryle en C₇ à C₃₀, un radical arylalkyle en C₇ à C₃₀ ou un radical arylalcényle en C₈ à à C₃₀ ;
Q et Q' sont identiques ou différents l'un de l'autre et représentent indépendamment un radical halogène, un radical alkyle en C₁ à C₂₀, un radical alcényle en C₂ à C₁₀, un radical aryle en C₆ à C₃₀, un radical alkylaryle en C₇ à C₃₀ ou un radical arylakyle en C₇ à C₃₀ et Q et Q' peuvent former ensemble un cycle hydrocarbure en C₁ à C₂₀ ;
B représente un radical alkylène en C₁ à C₄, un dialkyl-silicone, -germanium, une alkyl-phosphine ou -amine, qui est un pontage pour la connexion de deux ligands à base de cyclopentadiényle ou d'un ligand à base de cyclopentadiényle et de JR⁹_{z-y} par des liens covalents ;
R⁹ représente un radical hydrogène, un radical alkyle en C₁ à C₂₀, un radical alcényle en C₂ à C₂₀, un radical aryle en C₆ à C₃₀, un radical alkylaryle en C₇ à C₃₀ ou un radical arylalkyle en C₇ à C₃₀ ;
J représente un élément du groupe 15 ou un élément du groupe 16 du tableau périodique des éléments ;
z représente un indice d'oxydation de l'élément J ;
y représente un indice de liaison de l'élément J ;
a, a', n et n' sont identiques ou différents les uns des autres et sont des nombres entiers indépendamment positifs supérieurs à 0 ;
m représente un nombre entier valant de 0 à 3 ;
o représente un nombre entier valant de 0 à 2 ;
r représente un nombre entier valant de 0 à 2 ;
Y représente un hétéroatome de O, S, N ou P ; et
A représente l'hydrogène ou un radical alkyle en C₁ à C₁₀.

4. Procédé selon la Revendication 3, dans lequel le catalyseur métallocène sur support est un catalyseur métallocène sur support hybride de sorte que deux ou plusieurs catalyseurs métallocènes différents soient supportés sur une matière de support.

5. Procédé selon la Revendication 3, dans lequel le catalyseur métallocène sur support comprend en outre un composé sélectionné dans le groupe constitué de composés cocatalyseurs représentés par les formules chimiques allant de 7 à 9.
[Formule chimique 7] -[Al(R8)-0]ₙ-
dans la formule chimique 7,
R8 est identique ou différent l'un de l'autre et représente indépendamment un halogène ; un hydrocarbure en C₁ à C₂₀ ; ou un hydrocarbure en C₁ à C₂₀ substitué par l'halogène ; et
n représente un nombre entier valant 2 ou supérieur ;
[Formule chimique 8] D(R8)₃
dans la formule chimique 8
R8 est identique à l'élément de la formule chimique 7 ; et
D représente l'aluminium ou le bore ; 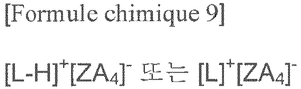
dans la formule chimique 9,
L représente un acide de Lewis neutre ou cationique ;
H représente un atome d'hydrogène ;
Z représente un élément du groupe 13 ; et
A est identique ou différent l'un de l'autre et représente indépendamment un groupe aryle en C₆ à C₂₀ ou un groupe alkyle en C₁ à C₂₀ dont au moins un des atomes d'hydrogène peut être substitué par un halogène, un hydrocarbure en C₁ à C₂₀, un alcoxy ou un phénoxy.

6. Procédé selon la Revendication 3, dans lequel la polymérisation de l'éthylène est réalisée en utilisant un réacteur sélectionné dans le groupe constitué d'un réacteur de polymérisation en suspension continue, d'un réacteur en phase gazeuse et d'un réacteur en phase liquide à lui seul ou en combinaison avec deux ou plusieurs des mêmes réacteurs ou de réacteurs différents.

7. Fibre comprenant l'homopolymère d'éthylène selon la Revendication 1.

8. Fibre selon la Revendication 7, la ténacité de la fibre étant de 9 à 12 gf/denier et le rapport d'étirage de 7 à 14 fois.

9. Fibre selon la Revendication 7, la ténacité de la fibre étant de 9 à 11 gf/denier et le rapport d'étirage de 9 à 13 fois.

10. Procédé de préparation d'une fibre en utilisant une composition de résine comprenant l'homopolymère d'éthylène selon la Revendication 1 et comprenant l'étape de l'opération d'extrusion par une extrudeuse.

11. Produit contenant la fibre selon la Revendication 7.

12. Produit selon la Revendication 11, qui est un produit de type monofilament ou un produit de type bâche.
